# EUROPÄISCHE PATENTANMELDUNG

(11) **EP 1 281 550 A2**
(43) Veröffentlichungstag der Anmeldung: **05.02.2003**
(21) Anmeldenummer: 02015485.2
(22) Anmeldetag: 12.07.2002
(51) Int. Cl.: B60J 7/06

(54) **Kraftwagen mit einem Dach mit Schiebeverdeck**

(30) Priorität: 04.08.2001 DE 10138370
(71) Anmelder: DaimlerChrysler AG, 70567 Stuttgart (DE)
(72) Erfinder: Marold, Adolf, 71189 Ehningen (DE); Moll, Ulrich, 71134 Aidlingen (DE); Zipperle, Siegfried, 71134 Aidlingen (DE)

(57) **Zusammenfassung**

Die Erfindung betrifft einen Kraftwagen mit einem vorderen Dachbereich (12), welcher eine durch ein Schiebeverdeck (26) verschließbare Dachöffnung (28) aufweist,
mit einem hinteren Dachbereich (14), welcher über einen Karosseriequerträger (32) miteinander verbundene Dachsäulen (34) umfasst,
und mit einer Schiebeführung des Schiebeverdecks (26) entlang von seitlichen Führungen (46,48) des vorderen (12) und hinteren (14) Dachbereichs, wobei das Schiebeverdeck (26) durch die Führungen (46,48) im vorderen Dachbereich (12) etwa horizontal nach hinten und im hinteren Dachbereich (14) nach unten in eine Verstaulage absenkgeführt ist.

Die Führungen (48) sind im hinteren Dachbereich (14) auf der dem Innenraum des Kraftwagens zugewandten Seite der Dachsäulen (34) angeordnet, wobei das Schiebeverdeck (26) vor dem Karosseriequerträger (32) des hinteren Dachbereichs (14) her zwischen die Dachsäulen (34) geführt ist.

## Beschreibung

Die Erfindung betrifft einen Kraftwagen der im Oberbegriff des Patentanspruchs 1 angegebenen Art.

Ein solcher Kraftwagen ist aus der EP 0 347 859 bekannt und umfasst ein vorderes, sich einem Windschutzscheibenrahmen anschließendes Teildach, welches eine durch ein Schiebeverdeck verschließbare Dachöffnung aufweist. Weiter ist ein hinteres Teildach vorgesehen, welches über einen Querträger miteinander verbundene Dachsäulen umfasst. Das Schiebeverdeck ist entlang von seitlichen Führungen des vorderen Teildachs etwa horizontal nach hinten schiebegeführt und entlang von seitlichen Führungen des hinteren Teildachs nach unten in eine Verstaulage absenkgeführt.

Als nachteilig ist bei dem bekannten Kraftwagen der Umstand anzusehen, dass insbesondere im Bereich des hinteren Teildachs die Außenkontur und die aerodynamischen Eigenschaften des Dachs durch das außenseitig geführte und in einer unteren Offenstellung verstaute Schiebeverdeck erheblich beeinflusst sind.

Aufgabe der Erfindung ist es daher, einen Kraftwagen der eingangs genannten Art zu schaffen, dessen Schiebeverdeck eine freiere Gestaltung der Außenkontur des Dachs ermöglicht und dessen Dach verbesserte aerodynamische Eigenschaften aufweist.

Diese Aufgabe wird erfindungsgemäß durch einen Kraftwagen mit den Merkmalen des Anspruchs 1 gelöst. Vorteilhafte Ausgestaltungen der Erfindung sind den übrigen Ansprüchen zu entnehmen.

Da erfindungsgemäß die Führungen im hinteren Dachbereich auf der dem Innenraum des Kraftwagens zugewandten Seite der Dachsäulen angeordnet sind, ist eine freiere Gestaltung der Außenkontur des hinteren Dachbereich möglich. Darüber hinaus weist das Dach des erfindungsgemäßen Kraftwagens durch die Führung des Schiebeverdecks im Innenraum des Kraftwagens verbesserte aerodynamische Eigenschaften auf.

Vorzugsweise ist das Schiebeverdeck in einen Verdeckstauraum versenkbar, welcher nahe des Innenraums unterhalb eines Fensters einer Rückwand angeordnet ist.

In einer bevorzugten Ausführungsform der Erfindung umfasst das Schiebeverdeck zwischen einen festen vorderen und hinteren einen zusammenschiebbaren mittleren Verdeckabschnitt. Beim Öffnen des Daches erfolgt die Verkürzung des mittleren Verdeckabschnitts im wesentlichen erst, nachdem der hintere Verdeckabschnitt seine Verstaulage in einem Verdeckstauraum erreicht hat. Mit anderen Worten wird der mittlere Verdeckabschnitt erst im Verdeckstauraum gefaltet, so dass die Öffnung im Verdeckstauraum bedeutend kleiner gewählt werden kann als bei bislang üblichen Schiebeverdecken dieser Art.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig.1: eine schematische Schnittansicht entlang der Mittellängsachse des Kraftwagens nach der Erfindung, welcher ein in seitlichen Führungen eines vorderen und hinteren Dachbereichs bewegbares Schiebeverdeck nach einer ersten Ausführungsform aufweist;
- Fig.2: eine schematische Perspektivansicht auf das geschlossene Schiebeverdeck nach einer zweiten Ausführungsform;
- Fig.3: eine schematische Perspektivansicht auf das geöffnete Schiebeverdeck nach Fig.2;
- Fig.4: ein schematische Prinzipdarstellung des Antriebsmechanismus des Schiebeverdecks in einer ersten Ausführungsform;
- Fig.5: ein schematische Prinzipdarstellung des Antriebsmechanismus des Schiebeverdecks in einer weiteren Ausführungsform;
- Fig.6: eine vergrößerte schematische Perspektivansicht auf eine Ausführungsform des Verdeckstauraums des geschlossenen Schiebeverdecks gemäß Fig.2; und in
- Fig.7: eine vergrößerte schematische Perspektivansicht auf den Verdeckstauraum des geöffneten Schiebeverdecks gemäß Fig.3.

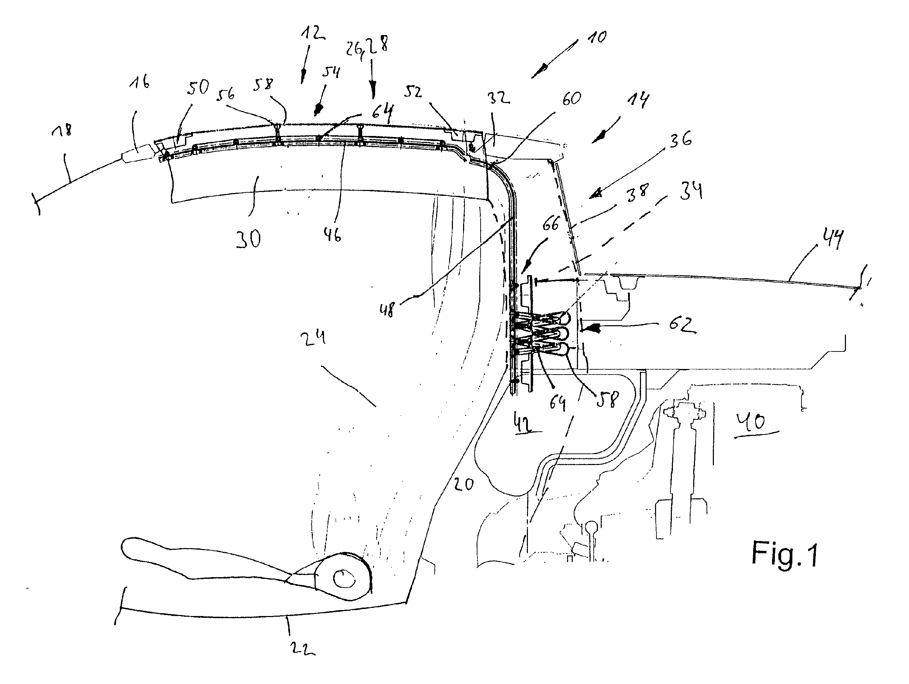

Fig.1 zeigt in schematisch angedeuteter Schnittansicht entlang seiner Mittellängsachse einen zweisitzigen Roadster-Kraftwagen mit Stufenheck, wobei vom Kraftwagen ein Dach 10 mit einem vorderen und hinteren Dachbereich 12,14 dargestellt sind. Von der Fahrgastzelle ist vor dem vorderen Dachbereich 12 eine durch einen Windschutzscheibenrahmen 16 getragene Windschutzscheibe 18 erkennbar. Außerdem ist von der Fahrgastzelle ein die seitlich Türöffnung begrenzender B-Säulenabschnitt 20 sowie ein Schwellerabschnitt 22 schematisch angedeutet; ein innerhalb der Fahrgastzelle dargestellter Fahrzeugsitz 24 ist ebenfalls erkennbar.

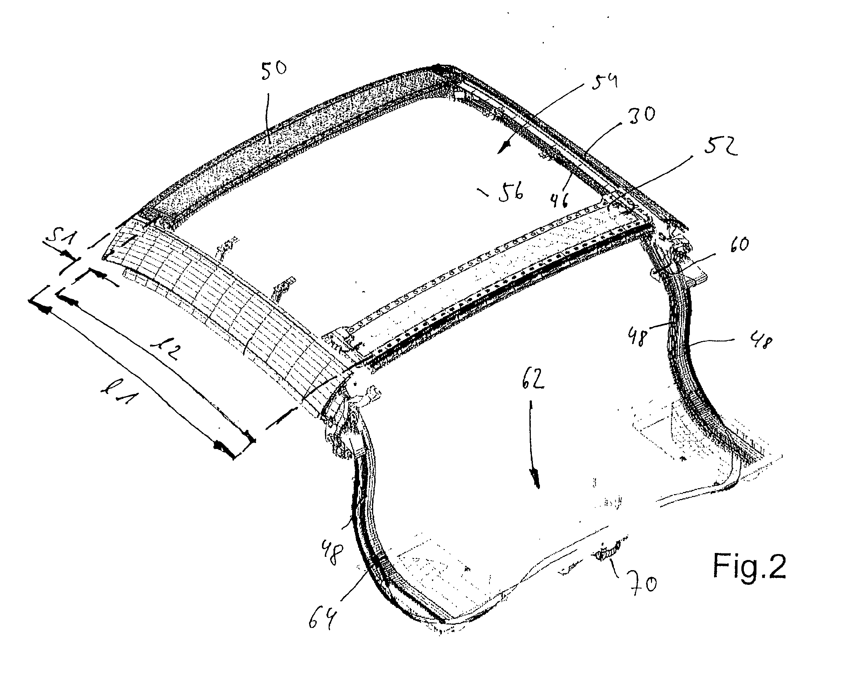

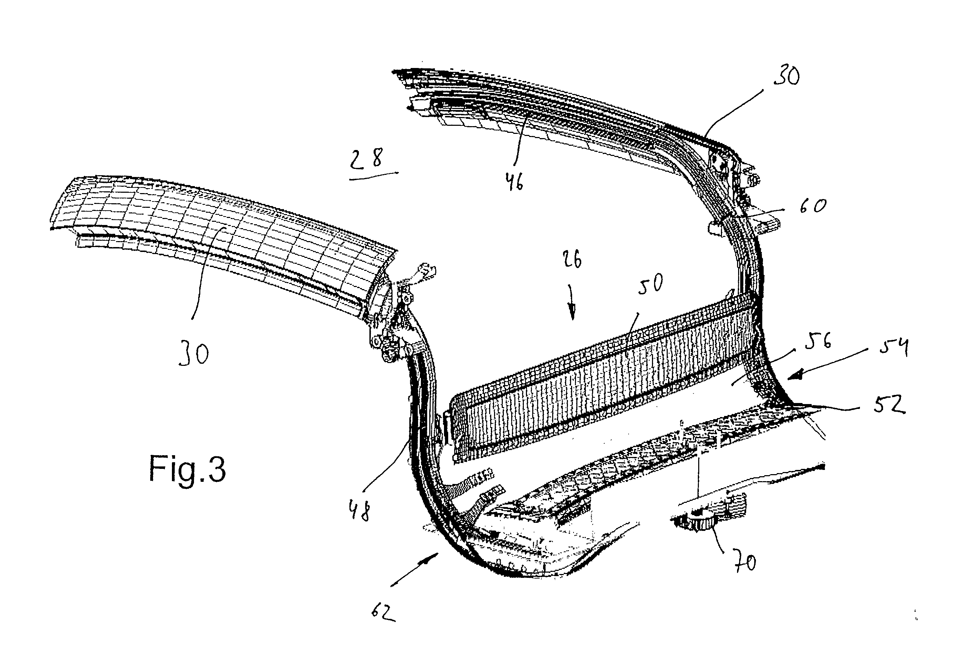

Der vordere Dachbereich 12 weist eine durch ein Schiebeverdeck 26 verschließbare Dachöffnung 28 auf, welche von zwei abnehmbaren, sich zwischen dem Windschutzscheibenrahmen 16 und dem hinteren Dachbereich 14 erstreckenden und insbesondere in den Figuren 2 und 3 erkennbaren Dachholmen 30 seitlich begrenzt ist. Das Schiebeverdeck 26 ist in Fig.1 in geschlossenem sowie verstautem, in Fig.2 in geschlossenem, und in Fig.3 in geöffnetem Zustand dargestellt. Wie im weiteren noch näher erläutert werden wird, sind die beiden Dachholme 30 bei vollständig geöffnetem Schiebeverdeck 26 bzw. Dachöffnung 28 vom Dach 10 abnehmbar.

Der hintere Dachbereich 14 umfasst über einen lediglich in Fig.1 dargestellten Karosseriequerträger 32 miteinander verbundene, in Fig.1 gestrichelt angedeutete Dachsäulen 34, welche sich in Verlängerung der B-Säulenabschnitte 20 erstrecken. Insgesamt bilden der Karosseriequerträger 32 und die Dachsäulen 34 hier einen Überrollbügel, der außenseitig an die Außenkontur des Kraftwagens angepasst ist. Weiter umfasst der hintere Dachbereich 14 eine Rückwand 36 mit einem Fenster 38, welches durch eine Heckscheibe verschlossen ist, die gegebenenfalls zum Öffnen und Schließen des Fensters 38 in vertikaler Richtung verfahren werden kann. Vom Heck des Kraftwagens sind in Fig.1 im wesentlichen ein Antriebsaggregat 40, ein Kraftstofftank 42 sowie ein Heckdeckel 44 an oder Oberseite eines Heckraumes dargestellt.

Wie insbesondere in Zusammenschau der Figuren 1 bis 3 ersichtlich, ist das Schiebeverdeck 26 zum Öffnen und Schließen der Dachöffnung 28 mit einer Schiebeführung entlang von seitlichen Führungen 46,48 des vorderen und hinteren Dachbereichs 12,14 bewegbar. Die seitlichen Führungen 46 im vorderen Dachbereich 12 sind in die seitlichen Dachholme 30 integriert. Die seitlichen Führungen 48 des hinteren Dachbereichs 14 sind innenseitig der Dachsäulen 34 angeordnet. Von dem hinteren Dachbereich 14 sind die Dachsäulen 34 und der Karosseriequerträger 32 in den Figuren 2 und 3 nicht gezeigt, sondern lediglich die die Dachöffnung 28 seitlich begrenzenden Dachholme 30 des vorderen Dachbereichs 12. Das in Fig.2 geschlossen und in Fig.3 geöffnet angedeutete Schiebeverdeck 26 umfasst im wesentlichen einen festen vorderen und hinteren Verdeckabschnitt 50,52, welche das vordere bzw. hintere Ende des Schiebeverdecks 26 bilden. Der vordere und hintere Verdeckabschnitt 50,52 sind über einen im weiteren noch näher beschriebenen, zusammenschiebbaren mittleren Verdeckabschnitt 54 miteinander verbunden. Von dem mittleren Verdeckabschnitt 54 sind in den Figuren 2 und 3 lediglich zwei über dessen Länge verteilte Schleppspriegel 56 dargestellt, welche wie der vordere und hintere Verdeckabschnitt 50,52 durch geeignete Mittel entlang der Führungen 46,48 verschiebegeführt sind. Zwischen dem vorderen und hinteren Verdeckabschnitt 50,52 erstreckt sich ein in Figur 1 erkennbarer Faltbezug 58, der beispielsweise aus einem Verdeckstoff besteht. Der Faltbezug 58 ist auch an der Oberseite der Schleppspriegel 56 befestigt. Die Oberseite der Abschnitte 50,52 und 54 liegen bevorzugt in einer gemeinsamen Dachebene, welche an die Seitenholme 30 höhenangepasst ist. Die Führungen 46 im vorderen Dachbereich 12 und die Führungen 48 im hinteren Dachbereich 14 sind hier als im Querschnitt etwa U-förmige, mit ihrer offenen Seite in Richtung der Fahrzeugmitte zeigende Schienen ausgebildet. Wie insbesondere in Fig.1 erkennbar, verlaufen die Führungen 46 im vorderen Dachbereich 12 etwa horizontal nach hinten und die Führungen 48 im hinteren Dachbereich 14 hier etwa vertikal nach unten in eine Verstaulage des Schiebeverdecks 26. Die Führungen 46,48 sind dabei an den Dachholmen 30 bzw. auf der dem Innenraum des Kraftwagens zugewandten Seite der Dachsäulen 34 über nicht gezeigte Aufnahmen befestigt. Im Übergangsbereich zwischen dem vorderen und hinteren Dachbereich 12,14 gehen die einander jeweils seitlich zugeordneten Schienen 46 und 48 an einer Trennstelle 60 ineinander über; die Trennstelle 60 der jeweiligen Schienen dient dazu, um die Dachholme 30 nach dem vollständigen Öffnen des Schiebeverdecks 26 bzw. der Dachöffnung 28 vom Dach entfernen zu können. Weiter weisen die Schienen 46,48 im Übergangsbereich zwischen dem vorderen und hinteren Dachbereich 12,14 eine etwa S-förmige Krümmung sowie im Eckbereich zwischen dem vorderen, horizontalen und dem hinteren, vertikalen Verlauf eine weitere Krümmung auf. Das Schiebeverdeck 26 ist dadurch vor dem Karosseriequerträger 32 des hinteren Dachbereichs 14 her zwischen die Dachsäulen 34 nach unten in die Verstaulage absenkgeführt.

Im Bereich des unteren Endes der Führungen 48 im hinteren Dachbereich 14 ist das Schiebeverdeck 26 in einen Verdeckstauraum 62 absenkbar, welcher unterhalb des Fensters 38 der Rückwand 36 des hinteren Dachbereichs 14 angeordnet ist. Die Führungen 48 im hinteren Dachbereich 14 können dabei
- wie in Fig.1 gezeigt - etwa vertikal verlaufend enden, oder
- wie in den Figuren 2 und 3 gezeigt - eine weitere Krümmung aufweisen, so dass die Enden der Führungen 48 etwa horizontal enden. Demgemäss verlaufen die festen Verdeckabschnitt 50,52 bei dem in Fig.1 gezeigten Ausführungsbeispiel in ihrer Verstaulage mit ihrer Außenseite etwa vertikal; bei der in Fig.3 gezeigten Verstaulage verläuft der hintere feste Verdeckabschnitt 52 mit seiner Außenseite etwa horizontal und der vordere feste Verdeckabschnitt 50 mit seiner Außenseite etwa vertikal.

Beim Öffnen des Schiebeverdecks 26 wird nach dem nicht dargestellten Entriegeln in einer ersten Öffnungsphase zunächst der vordere Verdeckabschnitt 50 unter geringer Verkürzung von beispielsweise 10 bis 30 mm (s1(Fig.2)) des mittleren Verdeckabschnitts 54 gegen den zunächst ortsfest verbleibenden hinteren Verdeckabschnitt 52 bewegt, so dass der anfangs gespannte Faltbezug 58 zum Öffnen des Dachs entlastet wird, im wesentlich jedoch glatt und eben bleibt. Nach dieser Verkürzung des Abstandes L1 zwischen dem vorderen und hinteren Verdeckabschnitt 52,54 bzw. der Länge des mittleren Verdeckabschnitts 54 auf den Abstand 12 werden der vordere und hintere Verdeckabschnitt 50,52 gleichermaßen - also unter Beibehaltung von deren Abstand L2 in Richtung der in den Figuren 1 und 3 gezeigten Verstaulage bewegt. Mit anderen Worten bleibt der Faltbezug 58 während der gesamten Öffnungsbewegung des Schiebeverdecks 26 nahezu in seinem ursprünglich glatten, ebenen Zustand. Die zu Beginn der Öffnungsbewegung vorgenommene Entlastung des Faltbezugs 58 um die Länge s1 dient dazu, dass das Schiebeverdeck 26 bzw. dessen Faltbezug 58 beim Überführen in die Verstaulage insbesondere beim Durchfahren des Eckbereichs zwischen den vorderen und hinteren Führungen 46,48 nicht übermäßig gespannt wird und somit leicht in die Verstaulage gebracht werden kann. Im Verlauf der Öffnungsbewegung durchläuft dann zunächst der hintere Verdeckabschnitt 52 den Eckbereich zwischen vorderem und hinterem Dachbereich 12,14, bis dieser seine untere Verstaulage - entweder gemäß Fig.1 vertikal oder gemäß Fig.3 horizontal - erreicht. Nachdem der hintere Verdeckabschnitt 52 seine Verstaulage im Verdeckstauraum 62 erreicht hat, beginnt bei weiterem Öffnen des Schiebeverdecks 26 und der damit verbundenen Verschiebung des vorderen Verdeckabschnitts 52 in Richtung nach hinten bzw. unten die Verkürzung des mittleren Verdeckabschnitts 54, indem der Faltbezug 58 zusammengeschoben wird. Hierbei sind bei dem in Fig.1 gezeigten Ausführungsbeispiel Steuermittel 64 mit einer Scherenkinematik unterseitig des Faltbezugs 58 vorgesehen, wobei die Scherenkinematik erst zusammenschiebbar ist und den Faltbezug 58 in Falten legt, nachdem der hintere Verdeckabschnitt 52 seine Verstaulage im Verdeckstauraum 62 erreicht hat. Dabei wird der Faltbezug 58 ausgehend vom hinteren Verdeckabschnitt 52 in Falten gelegt, wobei der dem vorderen Verdeckabschnitt 50 nahe Teil des Faltbezugs 58 weitgehend glatt und eben verbleibt, bis dieser je nach Fortschritt des Zusammenschiebens des mittleren Verdeckabschnitts 54 auch gefaltet wird. Dabei erfolgt der Faltvorgang hier ausschließlich innerhalb des Verdeckstauraums 62, so dass die in Fig.1 gezeigte Öffnung 66 im Verdeckstauraum 62 lediglich etwa dem Querschnitt des Verdecks in ungefaltetem, glatten Zustand entsprechen muss. Mit anderen Worten kann dadurch, dass das Schiebeverdeck mit seiner gesamten Länge 12 in den Verdeckstauraum 62 bewegt und erst dort gefaltet wird, die Öffnung 66 bedeutend kleiner gewählt werden als bei den bislang üblichen Schiebeverdecken 26 dieser Art. Es ist ersichtlich, dass das Schiebeverdeck 26 auch in jeder Zwischenstellung zwischen der Schließstellung und der Verstaulage angehalten werden kann, so dass die Dachöffnung 28 beispielsweise nur teilweise geöffnet ist.

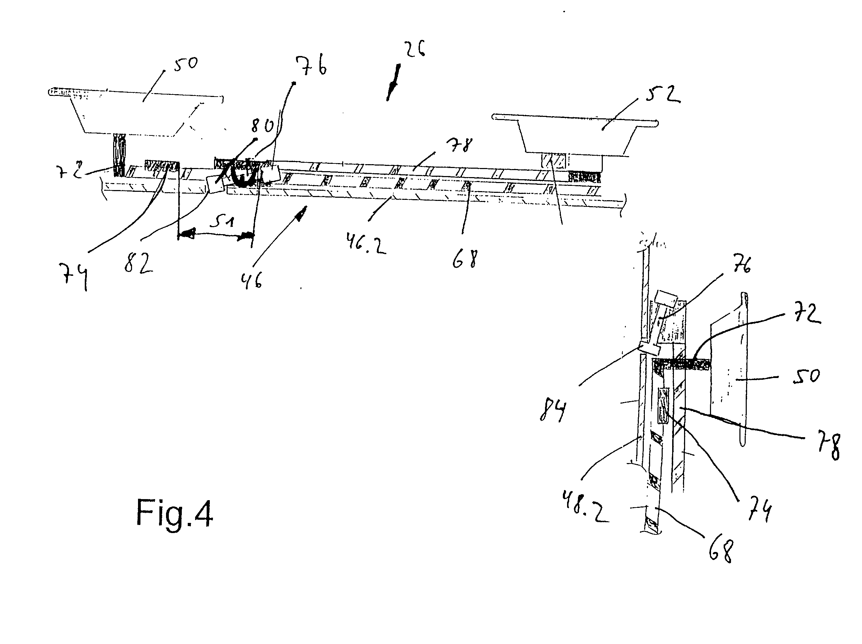

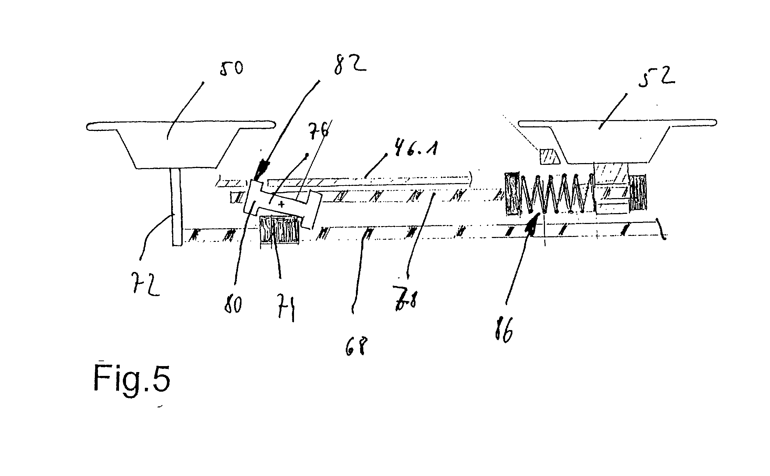

In den Figuren 4 und 5 ist eine schematische Prinzipdarstellung des Antriebsmechanismus des Schiebeverdecks 26 in einer ersten und in einer weiteren Ausführungsform dargestellt. In Fig.4 ist ausschnittweise der vordere und hintere Verdeckabschnitt 50,52 des Schiebeverdecks 26 sowie der Untergurt 46.2 der Führungsschiene 46 erkennbar. Innerhalb der Führungsschienen 46,48 im vorderen und hinteren Dachbereich 12,14 läuft jeweils ein seitliches linkes und rechtes Antriebskabel 68, welche über einen gemeinsamen, in den Figuren 2 und 3 erkennbaren Motor 70 angetrieben sind. Am jeweils vorderen Ende der Antriebskabel 70 ist über ein Zwischenstück 72 der vordere Verdeckabschnitt 50 befestigt. Werden nun die beiden Antriebskabel 70 zum Öffnen des Schiebeverdecks 26 linear nach hinten bewegt, so schleppen diese über das Zwischenstück 72 den vorderen Verdeckabschnitt 50 in Richtung nach hinten. An dem jeweiligen Antriebskabel 70 ist außerdem ein Eingriffstück 74 festgelegt, welche beim linearen Zurückbewegen der Antriebskabel 70 mit einer Wippe 76 in Eingriff kommt, wobei die Strecke zwischen der Ausgangsstellung und der Eingriffstellung des Eingriffstücks 74 der Strecke s1 entspricht. Über diese Strecke s1 wird somit unabhängig vom hinteren, fest verbleibenden Verdeckabschnitt 52 nur der vordere Verdeckabschnitt 50 in Richtung nach hinten bewegt, um den Faltbezug 58 - wie unter Bezugnahme auf die Figuren 1 bis 3 bereits erläutert - zu entlasten. Die Wippe 76 ist an einem Abstandshalter 78 befestigt, welcher andernends am hinteren Verdeckabschnitt 52 befestigt ist. Dieser Abstandshalter 78 definiert den Abstand L2, in welchem der vordere und hintere Verdeckabschnitt 50,52 während des Öffnens des Schiebeverdecks zueinander verfahren werden. Nachdem das Eingriffstück 74 mit der Wippe 76 in Eingriff gekommen ist, wird ein Wippenarm 80 außer Eingriff mit einer Öffnung 82 im Untergurt 46.2 der Führungsschiene 46 gebracht, und gleichzeitig stellt sich der gleichbleibende Abstand 12 ein, in welchem der vordere zum hinteren Verdeckabschnitt 50,52 während des Öffnens des Schiebeverdecks 26 bleibt.

Nachdem der hintere Verdeckabschnitt 52 - wie ebenfalls in Fig.4 dargestellt - seine hier vertikale Verstaulage erreicht hat, kommt der weitere Wippenarm 84 der Wippe 76 mit einer Öffnung 86 im Untergurt 48.2 der Führungsschiene 48 in Eingriff. Hierdurch kommt das Eingriffstück 74 mit der Wippe 76 außer Eingriff, und der hintere Verdeckabschnitt 52 verbleibt an Ort und Stelle, während der vordere Verdeckabschnitt 50 beim weiteren Öffnen des Verdecks 26 unter Zusammenfaltung des mittleren Verdeckabschnitts 54 weiter in Richtung des hinteren Verdeckabschnitts 52 bewegt wird. Schließlich erreicht auch der vordere Verdeckabschnitt 50 die in Fig.3 gezeigte Endlage und der Öffnungsvorgang des Schiebeverdecks 26 ist abgeschlossen. Der Schließvorgang erfolgt demgemäss in umgekehrter Reihenfolge.

Fig. 5 zeigt eine weitere Ausführungsform des Antriebsmechanismus des Schiebeverdecks 26, bei der im Unterschied zu der Ausführungsform nach Fig.4 der Wippenarm 80 der Wippe 76 mit einer Öffnung 82 im Obergurt 46.1 der Führungsschiene 46 in Eingriff gebracht ist. Beim Öffnen des Verdecks 26 kommt das Eingriffstück 74 durch Zurückbewegen des Antriebskabels 68 mit der Wippe 76 in Eingriff, wobei der Wippenarm 80 außer Eingriff mit der Öffnung 82 im Obergurt 46.1 der Führungsschiene 46 gebracht wird. Dabei umfasst der Abstandshalter 78 hier ein Federelement 86, mit welchem der Abstand L2 zwischen dem vorderen und hinteren Verdeckabschnitt 50,52 derart variiert werden kann, dass der Faltbezug 58 während des Öffnens des Verdecks 26 infolge der Federkraft des Federelements 86 permanent gespannt bleibt.

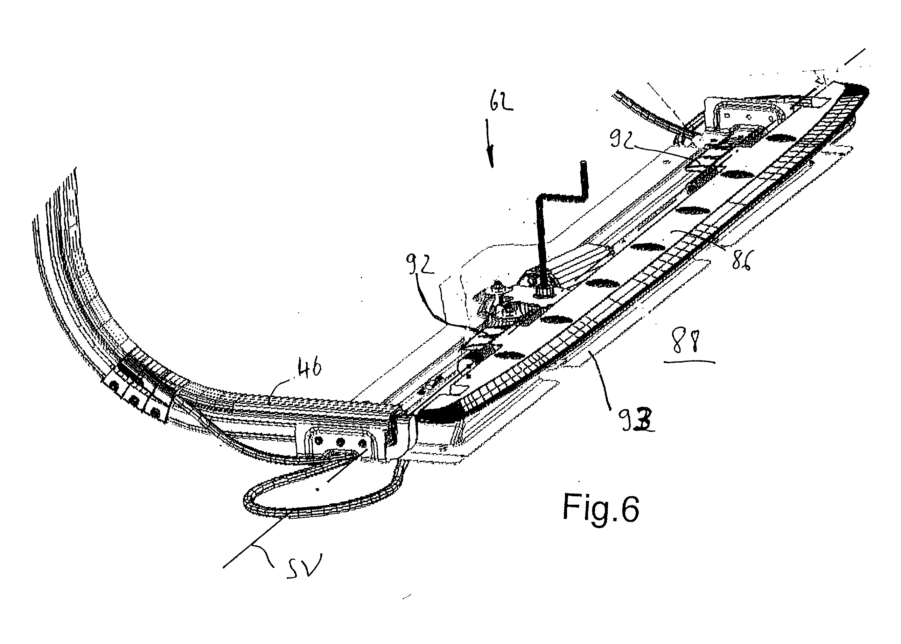

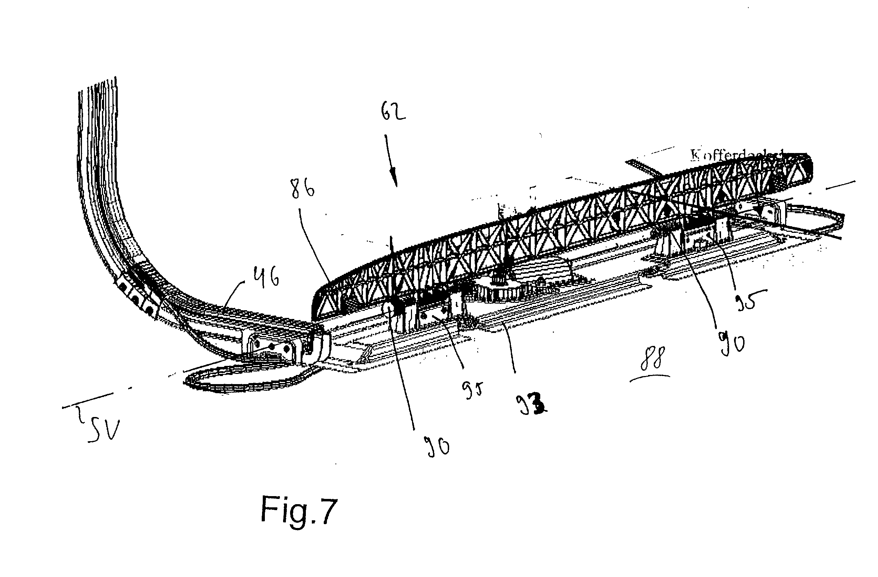

In den Figuren 6 und 7 ist in vergrößerter schematischer Perspektivansicht eine Ausführungsform des Verdeckstauraums 62 bei geschlossenem Schiebeverdeck gemäß Fig.2 bzw. bei geöffnetem Schiebeverdeck gemäß Fig.3 dargestellt. Dabei ist dem Schiebeverdeck 26 eine Verdeckschutzklappe 86 zugeordnet, welche am hinteren Ende der Führungen 46 des hinteren Dachbereichs 14 um eine Schwenkachse SV schwenkbar gelagert ist. In Fig.6 ist die als hier als ebenes Paneel ausgebildete Verdeckschutzklappe 86 in ihrer abgeklappten Stellung etwa parallel und oberhalb des Kofferraumbodens 88 dargestellt. In Fig.7 ist die Verdeckschutzklappe 86 in ihrer aufgerichteten Stellung - etwa senkrecht zum Kofferraumboden 88, und über einen erheblichen Teil der Höhe zwischen diesem und einem Kofferraumdeckel 44 (Fig.1) verlaufend - gezeigt. In der aufgerichteten Stellung bildet die Verdeckschutzklappe 86 somit die Abtrennung zwischen Verdeckstauraum 62 und Kofferraum. Die Verdeckschutzklappe 86 wird mittels zweier Federelemente 90 in ihrer aufgerichteten Gebrauchsstellung gehalten, wobei auf der der Verdeckschutzklappe 86 gegenüberliegenden Seite der Schwenkachse SV zwei Halteabschnitte 92 (Fig.6) vorgesehen sind, die in einer Ebene mit der Verdeckschutzklappe 86 liegen und einteilig mit dieser ausgebildet sind. Am Sockelbereich 93 der Verdeckschutzklappe 86 sind dabei in Fig.7 erkennbare vertikal verlaufende Anschlagflächen 95 vorgesehen, gegen welche die Halteabschnitte 92 mittels der durch die Federelemente 90 aufgebrachte Kraft gedrückt sind. Bei geschlossenem Schiebeverdeck 26 kann somit die Verdeckschutzklappe 86 nach hinten unten in ihre horizontale Stellung geklappt werden, und der dann vom Verdeck 26 nicht genutzte Verdeckstauraum 62 als zusätzlicher Bereich des Kofferraums genutzt werden. Ist die Verdeckschutzklappe 86 in ihre horizontale Stellung geklappt, wird beispielsweise über ein Abfrageschalter oder dgl. ein Öffnen des Schiebeverdecks 26 verhindert. Gleichfalls kann über ein Abfrageschalter oder dgl. verhindert werden, dass die Verdeckschutzklappe 86 bei bereits geöffnetem Verdeck 26 abgeklappt werden kann. Die Verdeckschutzklappe 86 ist in ihrer Höhe vorzugsweise so gestaltet, dass bei geöffnetem Schiebeverdeck 26 der in Fig.3 gezeigte hintere Verdeckabschnitt 52 überragt wird. Damit soll verhindert werden, dass ein Fahrzeuginsasse ein Gepäckstück auf dem hinteren Verdeckabschnitt 52 ablegt.

## Patentansprüche

1. Kraftwagen mit einem vorderen Dachbereich (12), welcher eine durch ein Schiebeverdeck (26) verschließbare Dachöffnung (28) aufweist, mit einem hinteren Dachbereich (14), welcher über einen Karosseriequerträger (32) miteinander verbundene Dachsäulen (34) umfasst, und mit einer Schiebeführung des Schiebeverdecks (26) entlang von seitlichen Führungen (46,48) des vorderen und hinteren Dachbereichs (12,14), wobei das Schiebeverdeck (26) durch die Führungen (46,48) im vorderen Dachbereich (12) etwa horizontal nach hinten und im hinteren Dachbereich (14) nach unten in eine Verstaulage absenkgeführt ist,
**dadurch gekennzeichnet,**
**dass** die Führungen (48) im hinteren Dachbereich (14) auf der dem Innenraum des Kraftwagens zugewandten Seite der Dachsäulen (34) angeordnet sind, wobei das Schiebeverdeck (26) vor dem Karosseriequerträger (32) des hinteren Dachbereichs (14) her zwischen die Dachsäulen (34) geführt ist.

2. Kraftwagen nach Anspruch 1,
**dadurch gekennzeichnet,**
**dass** der vordere Dachbereich (12) zwei abnehmbare, sich zwischen einem Windschutzscheibenrahmen (18) und dem hinteren Dachbereich (14) erstreckende Dachholme (30) umfasst, welche die Dachöffnung (28) seitlich begrenzen und in deren Führungen (46) das Schiebeverdeck (26) läuft.

3. Kraftwagen nach Anspruch 1,
**dadurch gekennzeichnet,**
**dass** das Schiebeverdeck (26) in einen Verdeckstauraum (62) versenkbar ist, welcher unterhalb eines Fensters (38) einer Rückwand (36) des hinteren Dachbereichs (14) angeordnet ist.

4. Kraftwagen nach Anspruch 3,
**dadurch gekennzeichnet,**
**dass** der Verdeckstauraum (62) mittels einer verschwenkbaren Verdeckschutzklappe (86) von einem Heckraum abteilbar ist.

5. Kraftwagen nach Anspruch 1,
**dadurch gekennzeichnet,**
**dass** die Führungen (48) des Schiebeverdecks (26) in einem Abstand vor der Rückwand (36) und etwa vertikal verlaufen.

6. Kraftwagen nach Anspruch 1,
**dadurch gekennzeichnet,**
**dass** das Schiebeverdeck (26) einen festen vorderen und hinteren Verdeckabschnitt (50,52) umfasst, die über einen zusammenschiebbaren mittleren Verdeckabschnitt (54) miteinander verbunden sind, wobei beim Öffnen des Daches (10) Steuermittel (64) vorgesehen sind, durch die eine Verkürzung des mittleren Verdeckabschnitts (54) im wesentlichen erst möglich ist, nachdem der hintere Verdeckabschnitt (52) seine Verstaulage erreicht hat.

7. Kraftwagen nach Anspruch 6,
**dadurch gekennzeichnet,**
**dass** der mittlere Verdeckabschnitt (54) durch Zusammenschieben eines Faltbezugs (58) verkürzbar ist.

8. Kraftwagen nach Anspruch 7,
**dadurch gekennzeichnet,**
**dass** in den Führungen (46,48) über die Länge des mittleren Verdeckabschnitts (54) verteilte Schleppspriegel (58) geführt sind, welche fest mit dem Faltbezug (58) verbunden sind.

9. Kraftwagen nach Anspruch 1,
**dadurch gekennzeichnet,**
**dass** in einer ersten Öffnungsphase beim Öffnen des Daches (10) der vordere Verdeckabschnitt (50) unter geringer Verkürzung des mittleren Verdeckabschnitts (54) gegen den hinteren Dachbereich (14) zu bewegen ist.

10. Kraftwagen nach Anspruch 6,
**dadurch gekennzeichnet,**
**dass** den seitlichen Führungen (46,48) des vorderen und hinteren Dachbereichs (12,14) jeweils ein Antriebskabel (62) zugeordnet ist, von welchen der vordere und hintere Verdeckabschnitt (50,52) mitnehmbar und entkoppelbar sind.
